# EUROPÄISCHE PATENTSCHRIFT

(11) **EP 3 678 851 B1**
(45) Veröffentlichungstag und Bekanntmachung des Hinweises auf die Patenterteilung: **04.08.2021**
(21) Anmeldenummer: 18785806.3
(22) Anmeldetag: 04.09.2018
(51) Int. Cl.: B29C 70/38, B29C 70/22, B33Y 10/00, B33Y 30/00, B29C 64/209, B29C 64/141, B29C 64/236, B29C 31/08

(54) **FERTIGUNGSANLAGE UND VERFAHREN ZUM LEGEN VON FASERBÄNDERN**
PRODUCTION SYSTEM AND METHOD FOR LAYING FIBER TAPES
DISPOSITIF ET PROCÉDÉ DE FABRICATION POUR LA DÉPOSITION DES RUBANS DE FIBRES

(30) Priorität: 08.09.2017 AT 507542017
(43) Veröffentlichungstag der Anmeldung: 15.07.2020
(73) Patentinhaber: Fill Gesellschaft m.b.H., 4942 Gurten (AT)
(72) Erfinder: DANNINGER, Norbert, 4770 Andorf (AT)
(74) Vertreter: Burger, Hannes
(86) Internationale Anmeldenummer: PCT/AT2018/060199
(87) Internationale Veröffentlichungsnummer: WO 2019/046875

(56) Entgegenhaltungen:
- AT-A4- 517 938
- DE-A1- 3 331 494
- US-A1- 2017 203 522

## Beschreibung

Die Erfindung betrifft eine Fertigungsanlage zum Legen von Faserbändern und ein Verfahren zum Legen von Faserbändern.

Aus der DE 10 2014 101 445 A1 ist ein Verfahren zum Aufbau eines Laminats und eine zugehörige Tapelegevorrichtung bekannt. Dabei wird ein mit Binder- und/oder Matrix-Werkstoffen versehenes abzulegendes Tape an eine Ablegeeinrichtung zugeführt. Das zugeführte Tape wird mittels der Ablegeeinrichtung abgelegt bis die zum Laminat korrespondierende Tapestruktur aus neben- und aufeinander abgelegtem Tape erhalten wird, wobei nebeneinander abgelegtes Tape eine Tapelage einer Tapestruktur definiert. Die Tapestruktur wird an eine Ultraschall-Anregungseinrichtung herangeführt und dabei die Binder- und/oder Matrix-Werkstoffe sukzessive plastifiziert und die einzelnen Tapelagen dadurch miteinander verbunden.

Aus der DE 10 2014 201 060 A1 ist eine Faserlegemaschine zur Herstellung von Fasergelegen bekannt. Die Faserlegemaschine weist einen Werkzeugtisch zum Positionieren eines Formwerkzeugs auf, der mittels eines x-Schlittens linear in einer x-Richtung verfahrbar und um eine vertikale Schwenkachse verschwenkbar ist. Oberhalb des Werkzeugtischs ist ein Faserlegekopf angeordnet, der mittels eines y-Schlittens linear und quer zu der x-Richtung verfahrbar ist.

Die aus der DE 10 2014 101 445 A1 und der DE 10 2014 201 060 A1 bekannten Vorrichtungen weisen den Nachteil auf, dass das Faserlegen mit derartig aufgebauten Vorrichtungen eine hohe Prozesszeit aufweist.

Weitere Vorrichtungen zur Herstellung von Fasergelegen sind aus der WO 2017/084823 A1, aus der US 2010/193103 A1, sowie aus der US 2014/299266 A1 bekannt.

Eine Vorrichtung gemäß dem Oberbegriff des Anspruchs 1 ist aus AT 517938 A4 bekannt.

Aufgabe der vorliegenden Erfindung war es, die Nachteile des Standes der Technik zu überwinden und eine Vorrichtung und ein Verfahren zur Verfügung zu stellen, mittels derer das Faserlegen und/oder Erstellen von Tapestrukturen vereinfacht wird.

Diese Aufgabe wird durch eine Vorrichtung und ein Verfahren gemäß den Ansprüchen 1 und 10 gelöst.

Erfindungsgemäß ist eine Fertigungsanlage zum Legen von Faserbändern ausgebildet. Die Fertigungsanlage umfasst:
- eine Legevorrichtung mit einer Abrollvorrichtungsaufnahme und zumindest zwei nebeneinander angeordneten Abrollvorrichtungen, welche Abrollvorrichtungen jeweils eine Aufnahmevorrichtung zur Aufnahme einer Rohmaterialrolle und eine Schneideinheit zum Schneiden des Faserbandes umfassen;
- eine Ablagevorrichtung mit einer Ablagefläche zur Aufnahme des von der Rohmaterialrolle abgerollten Faserbandes, wobei die Ablagefläche der Ablagevorrichtung und die Abrollvorrichtung der Legevorrichtung zueinander in Legerichtung relativverschiebbar sind, wodurch das Faserband streifenweise auf die Ablagefläche abrollbar ist. Die zumindest zwei Abrollvorrichtungen sind jeweils mittels einer Linearführung mit einer Abrollvorrichtungsaufnahme der Legevorrichtung gekoppelt und unabhängig voneinander in Legerichtung relativ zur Abrollvorrichtungsaufnahme verschiebbar.

Die erfindungsgemäße Fertigungsanlage weist den Vorteil auf, dass sie robust und wenig fehleranfällig aufgebaut ist. Darüber hinaus können mittels der erfindungsgemäßen Fertigungsanlage die einzelnen Faserbänder in einer kurzen Prozesszeit an der Ablagefläche zu einem Gelege gelegt werden.

Weiters kann es zweckmäßig sein, wenn die Abrollvorrichtungen jeweils einen Schweißkopf aufweisen, welcher zum Verschweißen von zwei übereinander abgelegten Faserbändern ausgebildet ist. Von Vorteil ist hierbei, dass durch diese Maßnahme die einzelnen Faserbänder der einzelnen Faserbandschichten aneinander anhaften können. Hierbei ist es nicht zwingend notwendig, dass die Verschweißung eine große Haltbarkeit aufweist, sondern kann vorgesehen sein, dass die Verschweißung zur reinen Stabilisierung dient.

Ferner kann vorgesehen sein, dass der Schweißkopf zumindest eine Niederdrückkufe und insbesondere ein Heizelement zur Erhitzung der Niederdrückkufe aufweist. Von Vorteil ist hierbei, dass ein derartiger, thermischer Schweißkopf einfach aufgebaut sein kann und darüber hinaus eine thermische Schweißverbindung eine ausreichende Stabilität aufweisen kann und einfach hergestellt werden kann.

Alternativ dazu kann vorgesehen sein, dass der Schweißkopf zum Ultraschallschweißen insbesondere mittels Ultraschallsonotorden bzw. Reibschweißen bzw. auch zum Widerstandsschweißen unter Verwendung von elektrischem Strom ausgebildet ist.

Darüber hinaus kann vorgesehen sein, dass die Ablagefläche der Ablagevorrichtung in einer Vertikalrichtung höhenverstellbar ist, sodass der Abstand der Ablagefläche zu den Abrollvorrichtungen anpassbar ist. Von Vorteil ist hierbei, dass durch diese Maßnahme die Ablagefläche an die jeweilige zu legende Faserbandschicht angepasst werden kann.

Alternativ oder zusätzlich dazu kann vorgesehen sein, dass die Abrollvorrichtungen in Vertikalrichtung verschiebbar sind.

Vorteilhaft ist auch eine Ausprägung, gemäß welcher vorgesehen sein kann, dass die Ablagefläche der Ablagevorrichtung in Querrichtung zur Legerichtung verschiebbar ist. Von Vorteil ist hierbei, dass durch diese Maßnahme in einem ersten Legeschritt nur jedes zweite Faserband gelegt werden muss und in einem anschließenden Legeschritt die zwischenliegenden fehlenden Faserbänder gelegt werden können.

Gemäß einer Weiterbildung ist es möglich, dass die Ablagefläche der Ablagevorrichtung um eine normal zur Ablagefläche stehende Rotationsachse drehbar ist. Von Vorteil ist hierbei, dass durch diese Maßnahme die Faserbänder der einzelnen Faserbandschichten in verschiedenen Winkel zueinander gelegt werden können, um beispielsweise ein Gelege in Form eines Karomusters zu erhalten.

Ferner kann es zweckmäßig sein, wenn jede der einzelnen Abrollvorrichtungen jeweils mit einer Antriebseinheit, insbesondere einem Linearmotor, gekoppelt sind, mittels welcher die Abrollvorrichtungen unabhängig voneinander in Legerichtung verschiebbar sind. Von Vorteil ist hierbei, dass durch diese Maßnahme die einzelnen Abrollvorrichtungen zeitlich versetzt zueinander angehalten werden können, um das Faserband an der Ablagefläche zu befestigen, wobei die restlichen Abrollvorrichtungen durch das Anhalten einer Abrollvorrichtung nicht gebremst werden. Dadurch kann insgesamt die Prozesszeit verkürzt werden. Dies ist besonders dann von Vorteil, wenn die Faserbandschicht eine komplexe Außenkontur aufweist und der Start bzw. das Ende der einzelnen Faserbänder versetzt zueinander angeordnet ist. Darüber hinaus kann vorgesehen sein, dass jeder der Abrollvorrichtungen ein eigener integrierter Schaltkreis zugeordnet ist, wobei die einzelnen integrierten Schaltkreise mit einer übergeordneten Zentralsteuerung gekoppelt sind. Von Vorteil ist hierbei, dass die einzelnen Aktoren der Abrollvorrichtungen nicht von der übergeordneten Zentralsteuerung angesteuert werden müssen, sondern dass die Rechenaufgaben im integrierten Schaltkreis übernommen werden können.

Weiters kann vorgesehen sein, dass im Bereich der Schneideinheit eine Kühlvorrichtung angeordnet ist, mittels welcher das Faserband kühlbar ist. Durch diese Maßnahme kann das Faserband lokal gekühlt werden, um es für den Schneidvorgang spröder zu machen. Dies ist insbesondere dann von Vorteil, wenn das Faserband aus einem zähen Werkstoff hergestellt ist. Erfindungsgemäß ist ein Verfahren zum Legen von Faserbändern, insbesondere unter Verwendung einer Fertigungsanlage nach einem der Ansprüche 1-9 vorgesehen. Das

Verfahren umfasst die folgenden Verfahrensschritte:
- Bereitstellen einer Legevorrichtung mit zumindest zwei nebeneinander angeordneten Abrollvorrichtungen, welche Abrollvorrichtungen jeweils eine Aufnahmevorrichtung zur Aufnahme einer Rohmaterialrolle eines Faserbandes und eine Schneideinheit zum Schneiden des Faserbandes umfassen, wobei die zumindest zwei Abrollvorrichtungen jeweils mittels einer Linearführung mit einer Abrollvorrichtungsaufnahme der Legevorrichtung gekoppelt sind und unabhängig voneinander in Legerichtung relativ zur Abrollvorrichtungsaufnahme verschiebbar sind;
- Bereitstellen einer Ablagevorrichtung mit einer Ablagefläche;
- Aufbringen des Faserbandes einer ersten der Abrollvorrichtungen auf die Ablagefläche der Ablagevorrichtung;
- Fixieren des Faserbandes der ersten Abrollvorrichtung auf der Ablagefläche der Ablagevorrichtung;
- Abrollen des Faserbandes der ersten Abrollvorrichtung durch verschieben der ersten Abrollvorrichtung in Legerichtung, wobei das Faserband dadurch auf die Ablagefläche abgerollt wird, dass es auf der Ablagefläche fixiert ist und durch das Verschieben der ersten Abrollvorrichtung von dieser abgezogen wird;
- Ablängen des Faserbandes mittels der Schneideinheit der ersten Abrollvorrichtung;
- Aufbringen des Faserbandes einer zweiten der Abrollvorrichtungen auf die Ablagefläche der Ablagevorrichtung;
- Fixieren des Faserbandes der zweiten Abrollvorrichtung auf der Ablagefläche der Ablagevorrichtung;
- Abrollen des Faserbandes der zweiten Abrollvorrichtung durch verschieben der zweiten Abrollvorrichtung in Legerichtung, wobei das Faserband dadurch auf die Ablagefläche abgerollt wird, dass es auf der Ablagefläche fixiert ist und durch das Verschieben der zweiten Abrollvorrichtung von dieser abgezogen wird;
- Ablängen des Faserbandes mittels der Schneideinheit der zweiten Abrollvorrichtung, wobei die Einzelschritte der ersten Abrollvorrichtung und der zweiten Abrollvorrichtung zu unterschiedlichen Zeitpunkten oder zum gleichen Zeitpunkt gestartet werden können und die erste Abrollvorrichtung und die zweite Abrollvorrichtung unabhängig voneinander bewegt werden können.

Das erfindungsgemäße Verfahren weist den Vorteil auf, dass die Prozesszeit zum Herstellen einer Faserbandschicht verkürzt werden kann. Insbesondere ist vorgesehen, dass die einzelnen Abrollvorrichtungen zeitlich verschoben gestartet werden können, dass diese jedoch voneinander unabhängig bewegt werden, sodass der Legevorgang für jedes Faserband individuell durchgeführt werden kann. Dadurch werden an einem Faserband notwendige Stehzeiten der Abrollvorrichtung nicht auf andere Abrollvorrichtungen übertragen.

Entsprechend einer vorteilhaften Weiterbildung kann vorgesehen sein, dass die Faserbänder einer ersten Faserbandschicht direkt an der Ablagefläche der Ablagevorrichtung an einer Zwischenschicht fixiert werden und anschließend die Faserbänder einer zweiten Faserbandschicht auf die Faserbänder der ersten Faserbandschicht aufgebracht wird, wobei jedes der Faserbänder der zweiten Faserbandschicht mittels einem an der Abrollvorrichtung angeordneten Schweißkopf mit Faserbändern der ersten Faserbandschicht wenigstens teilweise stoffschlüssig verbunden wird. Dies bringt den Vorteil mit sich, dass die Faserbänder der einzelnen Faserbandschichten an einander anhaften, sodass das dadurch entstehende Gelege einfach manipuliert werden kann.

Insbesondere kann es vorteilhaft sein, wenn die Anzahl der Abrollvorrichtungen geringer ist, als die Anzahl der pro Faserbandschicht vorgesehenen Faserbänder und dass in einem ersten Verfahrensschritt nur jedes zweite Faserband einer Faserbandschicht gelegt wird, anschließend die Ablagefläche der Ablagevorrichtung in Querrichtung zur Legerichtung verschoben wird und anschließend in einem weiteren Verfahrensschritt die zwischenliegenden, fehlenden Faserbänder einer Faserbandschicht gelegt werden. Von Vorteil ist hierbei, dass durch diese Maßnahme die Breite der Abrollvorrichtungen sehr viel größer sein kann als die Breite der einzelnen Faserbänder. Dadurch können die Abrollvorrichtungen robust ausgebildet sein bzw. alle notwendigen Komponenten aufweisen. Durch den zweiten Verfahrensschritt des Zwischenlegens der noch fehlenden Bänder kann eine vollständige Faserbandschicht gelegt werden.

Ferner kann vorgesehen sein, dass die Restlänge des auf der Rohmaterialrolle befindlichen Faserbandes ständig überwacht wird und dass vor dem Start des Legens der Faserbänder berechnet wird, ob die Restlänge des auf der Rohmaterialrolle befindlichen Faserbandes ausreichend für den anstehenden Legevorgang ist, wobei bedarfsweise eine in einem Rollenspeicher befindliche Rohmaterialrolle eingetauscht wird. Von Vorteil ist hierbei, dass durch diese Maßnahme erreicht werden kann, dass nicht während dem Legevorgang das Faserband auf der Rohmaterialrolle ausgeht. Die Überwachung der Restlänge des Faserbandes kann beispielsweise mittels einem Sensor erfolgen. Alternativ dazu kann die Restlänge des Faserbandes auch durch Berechnung des Verbrauches auf Basis der bereits gelegten Faserbandbahnen ermittelt werden.

Darüber hinaus kann vorgesehen sein, dass der Bestand an in einem Rollenspeicher befindlichen Rohmaterialrollen überwacht wird, wobei bei Erreichen eines vordefinierten Minimums an Rohmaterialrollen ein Bestellvorgang ausgelöst wird, bei welchem ein Befehl von der Zentralsteuerung an einen in einem Netzwerk befindlichen Rechner gesandt wird. Von Vorteil ist hierbei, dass durch diese Maßnahme der Bestand an im Rollenspeicher befindlichen Rohmaterialrollen nicht vom Maschinenbediener überwacht werden muss, sondern dass der Bestellvorgang automatisch ausgelöst wird. Durch diese Maßnahme wird das Risiko eines Maschinenstillstands durch menschliches Versagen verringert.

Vorteilhaft ist auch eine Maßnahme, gemäß welcher vorgesehen sein kann, dass die Abrollvorrichtungen beim Fixieren des Faserbandes auf der Ablagefläche der Ablagevorrichtung in deren Verfahrbewegung gestoppt oder zumindest stark abgebremst werden. Dadurch kann die Startposition bzw. die Endposition der Faserbänder positionsgenau festgelegt werden.

Unter Gelege versteht man eine Anordnung von mehreren übereinander angeordneten Faserbandschichten, wobei die einzelnen Faserbänder der einzelnen Faserbandschichten in gleicher und/oder unterschiedlichen Richtungen angeordnet sein können. Die einzelnen Faserbandschichten müssen hierbei nicht zwingend zueinander fixiert sein.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung eines Ausführungsbeispiels einer Fertigungsanlage in einer perspektivischen Ansicht;
- Fig. 2: ein erstes Ausführungsbeispiel einer Abrollvorrichtung in einer perspektivischen Ansicht;
- Fig. 3: das erstes Ausführungsbeispiel der Abrollvorrichtung in einer perspektivischen Detailansicht;
- Fig. 4: das erstes Ausführungsbeispiel der Abrollvorrichtung in einer perspektivischen Detailansicht;
- Fig. 5: ein erstes Ausführungsbeispiel einer Anordnung von Abrollvorrichtungen in einer Draufsicht;
- Fig. 6: ein zweites Ausführungsbeispiel einer Anordnung von Abrollvorrichtungen in einer Draufsicht;
- Fig. 7: ein drittes Ausführungsbeispiel einer Anordnung von Abrollvorrichtungen in einer Draufsicht;
- Fig. 8: ein weiteres Ausführungsbeispiel einer Fertigungsanlage mit Rollenspeicher in einer Seitenansicht;
- Fig. 9: ein Ausführungsbeispiel einer Schneideinheit mit einer Kühlvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

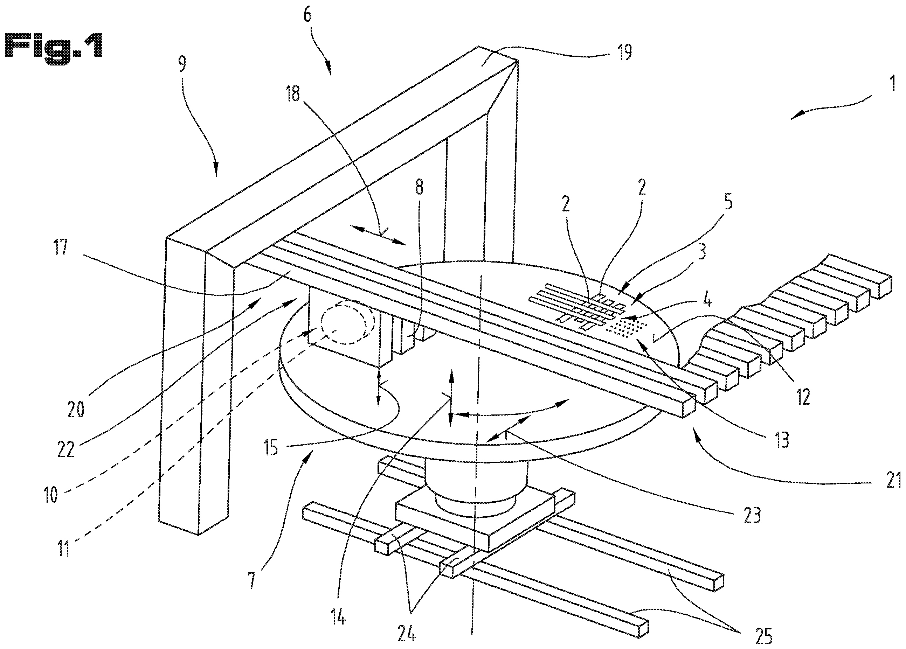

Fig. 1 zeigt eine perspektivische Ansicht einer Fertigungsanlage 1 zum Legen von Faserbändern 2. Mittels der Fertigungsanlage 1 können die Faserbänder 2 in eine erste Faserbandschicht 3 gelegt werden. Die Faserbandschicht 3 kann durch die Verwendung von einzelnen Faserbändern 2 in der Fertigungsanlage 1 eine konturierte und an den jeweiligen Einsatz angepasste Außenumrandung aufweisen. Weiters kann vorgesehen sein, dass in der Fertigungsanlage 1 eine zweite Faserbandschicht 4 oder auch zusätzliche Faserbandschichten übereinandergelegt und dadurch zu einem Gelege 5 weiterverarbeitet werden.

Die Faserbänder 2 welche in der Fertigungsanlage 1 verarbeitet werden, können beispielsweise in Form von trockenen Fasern ausgebildet sein. Weiters ist es auch möglich, dass die Faserbänder 2 als vorimprägnierte Fasern ausgebildet sind, welche Reaktionsharze aufweisen, die aus einer meist hochviskosen, jedoch noch nicht polymerisierten duroplastischen Kunststoffmatrix und/oder aus einer thermoplastischen Kunststoffmatrix, oder auch einer anderen Matrix bestehen. Darüber hinaus können die Faserbänder 2 Klebeschichten aufweisen durch welche einzelne Faserbandschichten 3, 4 aneinander anhaften können.

Die Fertigungsanlage 1 umfasst eine Legevorrichtung 6 zum Legen des Faserbandes 2 und eine Ablagevorrichtung 7 zur Aufnahme der gelegten Faserbänder 2. Weiters kann eine Manipulationsvorrichtung vorgesehen sein, mittels welcher die auf der Ablagevorrichtung 7 gelegten Faserbänder 2 bzw. Faserbandschichten 3 von der Ablagevorrichtung 7 abgenommen werden können.

Die Legevorrichtung 6 umfasst zumindest zwei Abrollvorrichtungen 8, welche nebeneinander an einer Abrollvorrichtungsaufnahme 9 angeordnet sind.

Die Abrollvorrichtungen 8 weisen jeweils eine Aufnahmevorrichtung 10 zur Aufnahme einer Rohmaterialrolle 11 auf.

Wie in Fig. 1 ersichtlich, weist die Ablagevorrichtung 7 eine Ablagefläche 12 auf, an welcher das von der Abrollvorrichtung 8 abgerollte Faserband 2 abgelegt und positioniert werden kann.

Um das Faserband 2 an der Ablagefläche 12 fixieren zu können, kann vorgesehen sein, dass an der Ablagefläche 12 mehrere Durchtrittsöffnungen 13 ausgebildet sind, an welchen Luft abgesaugt wird, wodurch an der Ablagefläche 12 ein Unterdruck aufgebracht werden kann. Insbesondere kann vorgesehen sein, dass die Durchtrittsöffnungen 13 mit einer Vorrichtung zum Erzeugen von Unterdruck strömungsverbunden sind. Eine derartige Vorrichtung zum Erzeugen von Unterdruck kann beispielsweise durch ein Axial- oder Radialgebläse realisiert werden.

Insbesondere kann vorgesehen sein, dass die Ablagevorrichtung 7 einen Rundtisch aufweist, an welchem die Ablagefläche 12 ausgebildet ist. Die Ablagefläche 12 kann in einer Vertikalrichtung 14 verschiebbar sein, sodass ein Abstand 15 zwischen der Abrollvorrichtung 8 und der Ablagefläche 12 variierbar ist. Durch diese Maßnahme kann die Ablagefläche 12 an verschiedene Faserbänder 2 bzw. an die Ablage in der jeweiligen Faserbandschicht 3, 4 angepasst werden.

Weiters kann vorgesehen sein, dass die Ablagefläche 12 um eine Rotationsachse 16 verdrehbar angeordnet ist, sodass die Orientierung der Faserbänder 2, welche auf die Ablagefläche 12 gelegt werden, verändert werden kann. Somit ist es möglich, dass in mehreren übereinander liegenden Schichten von Faserbändern 2 diese in verschiedenen Orientierungsrichtungen ausgebildet sind. Beispielsweise kann dadurch ein Karomuster bzw. rautenförmiges Muster erreicht werden.

Alternativ oder zusätzlich zur Verstellung der Ablagefläche 12 in Vertikalrichtung 14 kann auch vorgesehen sein, dass die Linearführungen 17 und somit die Abrollvorrichtungen 8 in Vertikalrichtung 14 verschiebbar sind.

Die Abrollvorrichtungen 8 sind jeweils an einer Linearführung 17 angeordnet, mittels welcher sie in Legerichtung 18 verschiebbar sind. Insbesondere kann vorgesehen sein, dass jede der Abrollvorrichtungen 8 an einer eigenen Linearführung 17 angeordnet ist. Weiters kann auch vorgesehen sein, dass die Abrollvorrichtungen 8 in Querrichtung 23 relativ zueinander verschiebbar sind. Weiters kann auch vorgesehen sein, dass alle Abrollvorrichtungen 8 gemeinsam in Querrichtung 23 verschiebbar sind. Dadurch können die Bandbreiten angepasst werden, bzw. die Faserbänder 2 kurvig gelegt werden.

Weiters kann vorgesehen sein, dass die Abrollvorrichtungsaufnahme 9 ein oder mehrere Portale 19 aufweist, an welchem die einzelnen Linearführungen 17 angeordnet sind. Der Übersichtlichkeit halber ist in Fig. 1 nur ein Portal 19 dargestellt, welches im Bereich eines ersten Linearführungsendes 20 angeordnet ist. Natürlich kann auch vorgesehen sein, dass im Bereich des zweiten Linearführungsendes 21 ebenfalls ein Portal 19 ausgebildet ist. Darüber hinaus kann auch zwischen den beiden Linearführungsenden 20, 21 ein oder mehrere Portale 19 ausgebildet sein.

Anstatt der Portale 19 können natürlich auch sämtliche andere Befestigungsmöglichkeiten zur Aufnahme der Linearführungen 17 ausgebildet sein.

Zum Verschieben der Abrollvorrichtungen 8 in Legerichtung 18 entlang der Linearführungen 17 kann eine Antriebseinheit 22 ausgebildet sein. In einem ersten Ausführungsbeispiel kann vorgesehen sein, dass die Antriebseinheit 22 beispielsweise als Linearmotor ausgebildet ist, wobei der Stator direkt in die Linearführung 17 integriert sein kann.

Alternativ dazu kann beispielsweise vorgesehen sein, dass die Antriebseinheit 22 ein Zugmittel aufweist, welches mit der Abrollvorrichtung 8 gekoppelt ist und zwischen den beiden Linearführungsenden 20, 21 der Linearführung 17 gespannt ist. Ein Antriebsmotor kann hierbei im Bereich einer der Linearführungsenden 20, 21 angeordnet sein.

Natürlich kann die Antriebseinheit 22 auch ein Zahnrad oder sonstige Mittel, welche zum Verschieben der Abrollvorrichtungen dienen, aufweisen.

Weiters kann vorgesehen sein, dass die Ablagefläche 12 in einer Querrichtung 23, welche quer zur Legerichtung 18 angeordnet ist, verschiebbar ist. Hierzu kann eine Querrichtungsführung 24 ausgebildet sein. Die Querrichtungsführung 24 kann, wie in Fig. 1 dargestellt, beispielsweise durch zwei Linearführungen gebildet werden.

Weiters kann vorgesehen sein, dass die Ablagevorrichtung 7 mit einer Längsrichtungsführung 25 gekoppelt ist, mittels welcher die Ablagefläche 12 in Legerichtung 18 verschiebbar ist. Durch diese Maßnahme kann die Ablagevorrichtung 7 aus dem Bereich der Legevorrichtung 6 herausgefahren werden, sodass das auf der Ablagefläche 12 gelegte Gelege 5 mittels einer Manipulationsvorrichtung von der Ablagefläche 12 entfernt werden kann. Das Gelege 5 kann anschließend mittels der Manipulationsvorrichtung in eine Pressform, insbesondere eine 3D-Form, eingelegt werden.

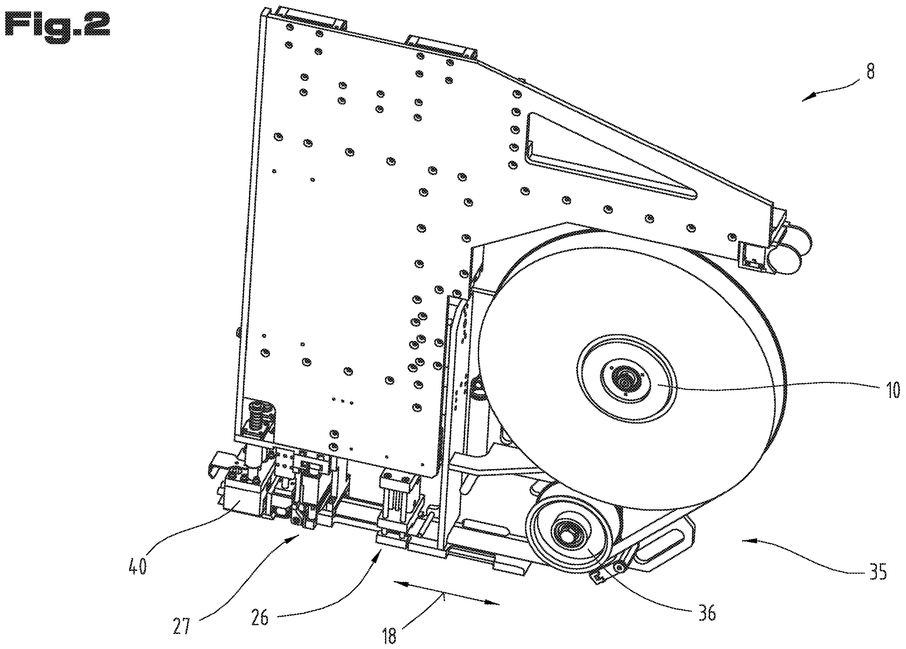

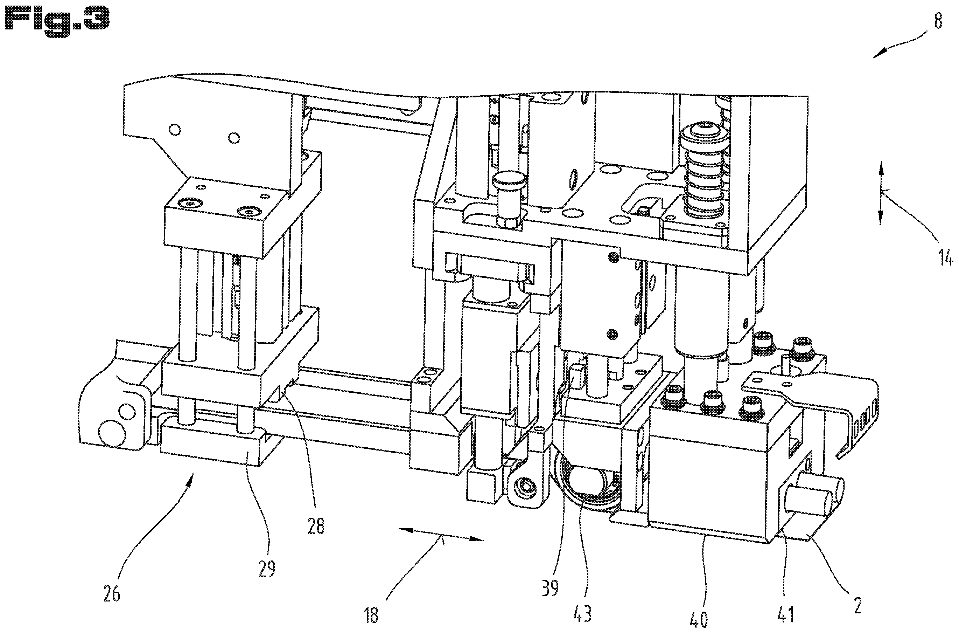

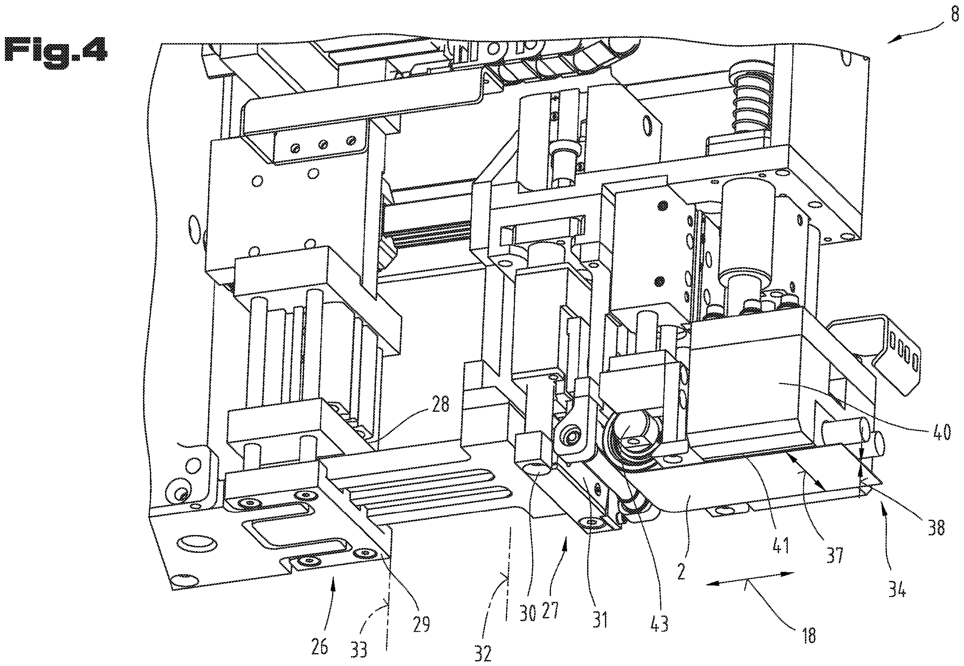

In der Fig. 2 ist die Abrollvorrichtung 8 in einer ersten perspektivischen Ansicht dargestellt. In den Figuren 3 und 4 ist die Abrollvorrichtung 8 in weiteren perspektivischen Ansichten dargestellt, wobei in den Figuren 3 und 4 Details der Abrollvorrichtung 8 ersichtlich sind. Für gleiche Teile werden wiederum gleiche Bezugszeichen bzw. Bauteilbezeichnungen wie in den jeweils vorangegangenen Figuren verwendet. Um unnötige Wiederholungen zu vermeiden, wird auf die detaillierte Beschreibung in den jeweils vorangegangenen Figuren hingewiesen bzw. Bezug genommen. Die Abrollvorrichtung 8 wird auf Basis einer Zusammenschau der Figuren 2 bis 4 beschrieben.

Die Abrollvorrichtung 8 umfasst eine Klemmeinheit 26 zum Fixieren des von der Rohmaterialrolle 11 abzuwickelnden Faserbandes 2 und eine Schneideinheit 27 zum Schneiden des Faserbandes 2. Insbesondere kann vorgesehen sein, dass die Klemmeinheit 26 einen Klemmbacken 28 aufweist und dass das Faserband 2 zwischen Klemmbacken 28 und einem Gegenhalter 29 geklemmt wird. Der Klemmbacken 28 kann hierbei an einem Aktor, wie etwa einem Pneumatikzylinder verschiebbar aufgenommen sein.

Weiters kann vorgesehen sein, dass die Schneideinheit 27 in Form einer Guillotine ausgebildet ist, wobei die Schneideinheit 27 ein Schneidmesser 30 und einen Gegenhalter 31 umfassen kann. Der Gegenhalter 31 des Schneidmessers 30 kann direkt neben dem Gegenhalter 29 des Klemmbacken 28 anschließend an diesen angeordnet sein.

Weiters kann vorgesehen sein, dass das Schneidmesser 30 an einem Aktor, wie etwa einem Pneumatikzylinder angeordnet ist, wodurch das Schneidmesser 30 relativ zum Gegenhalter 31 bewegt werden kann und somit die Schneidbewegung durchgeführt werden kann.

Außerdem ist es möglich, dass die Klemmeinheit 26 in Legerichtung 18 relativ zur Schneideinheit 27 verschiebbar an der Abrollvorrichtung 8 angeordnet ist. Dadurch kann die Klemmeinheit 26 zwischen einer vorgeschobenen Ausstoßstellung 32 und einer zurückgezogenen Grundstellung 33 hin und her bewegt werden. Dies ist insbesondere dazu notwendig, um nach dem Abschneiden des Faserbandes 2 einen Bandansatz 34 zur Verfügung zu stellen, an welchem das Faserband 2 zum Abrollen eines weiteren Faserbandstreifens fixiert werden kann.

Alternativ oder zusätzlich kann auch vorgesehen sein, dass die Schneideinheit 27 in Legerichtung 18 verschiebbar ist.

Weiters kann vorgesehen sein, dass in der Abrollvorrichtung 8 das von der Rohmaterialrolle 11 abgerollte Faserband 2 durch eine Umlenkrollenanordnung 35 geführt wird, welche zumindest eine Umlenkrolle 36 aufweist. Im Verlauf des Faserbandes 2 gesehen, kann neben der Umlenkrollenanordnung 35 die Klemmeinheit 26 und dem Verlauf des Faserbandes 2 weiter folgend die Schneideinheit 27 angeordnet sein.

Das Faserband 2 weist eine Breite 37 auf, welche zwischen 2 mm und 200 mm, insbesondere zwischen 5 mm und 100 mm, bevorzugt zwischen 10 mm und 50 mm betragen kann. Weiters weist das Faserband 2 eine Bandstärke 38 auf, welche zwischen 0,03 mm und 10 mm, insbesondere zwischen 0,5 mm und 5 mm, bevorzugt zwischen 0,8 mm und 3 mm betragen kann.

Wie aus Fig. 3 ersichtlich, kann eine optische Einheit 39 vorgesehen sein, welche zur Banderkennung dient. Die optische Einheit 39 kann vorzugsweise neben der Schneideinheit 27 an der Abrollvorrichtung 8 angeordnet sein, sodass mittels der optischen Einheit 39 beim Abrollen des Faserbandes 2 die Länge eines abgerollten Faserstreifens ermittelt werden kann. Weiters kann die optische Einheit 39 derart ausgebildet sein, dass die Qualität und/oder Abmessungen des Faserbandes 2 geprüft werden kann. Darüber hinaus kann die optische Einheit 39 zum Identifizieren des Faserbandes 2 eingesetzt werden. Weiters kann die optische Einheit 39 zur Kontrolle der Breite des Faserbandes 2 bzw. zur Kontrolle des Laufes des Faserbandes 2 dienen.

Alternativ dazu oder zusätzlich kann vorgesehen sein, dass in der Umlenkrolle 36 oder in der Aufnahmevorrichtung 10 für die Rohmaterialrolle 11 ein Erfassungs- oder Messsystem verbaut ist, mittels welchem die Länge des abgerollten Bandes erfasst werden kann.

Weiters kann vorgesehen sein, dass in der Aufnahmevorrichtung 10 für die Rohmaterialrolle 11 eine Bremseinheit verbaut ist, sodass die Rohmaterialrolle 11 gebremst werden kann und dadurch ein unerwünschtes Abwickeln des Faserbandes 2 unterbunden werden kann. Mittels der Bremseinheit kann die Spannung der Faserbänder 2 konstant gehalten werden. Hierbei kann die Abnahme des Abwickeldurchmessers des Faserbandes 2 von der Rohmaterialrolle 11 berücksichtigt werden.

In einer alternativen Ausführungsvariante kann vorgesehen sein, dass die Aufnahmevorrichtung 10 für die Rohmaterialrolle 11 eine Antriebseinheit umfasst, mittels welcher die Rohmaterialrolle 11 bedarfsweise angetrieben bzw. abgebremst werden kann. Dadurch kann eine erhöhte Zugbelastung am Faserband 2 bei erhöhten Bearbeitungsgeschwindigkeiten hintangehalten werden, wodurch die Bearbeitungsgeschwindigkeiten weiter erhöht werden können.

Weiters kann vorgesehen sein, dass die Abrollvorrichtung 8 einen Schweißkopf 40 umfasst, welcher zum Verschweißen der einzelnen Faserbänder 2 der einzelnen Faserbandschichten 3, 4 dient. Insbesondere kann vorgesehen sein, dass der Schweißkopf 40 in Vertikalrichtung 14 auf eine Oberfläche des von der Rohmaterialrolle 11 gewickelten Faserbandes drückt. Hierbei können im Schweißkopf 40 Niederdrückkufen 41 ausgebildet sein, welche eine lokal höhere Flächenpressung auf das Faserband 2 aufbringen. Weiters kann vorgesehen sein, dass im Schweißkopf 40 ein Heizelement 42 ausgebildet ist, mittels welche die Niederdrückkufen 41 erhitzt werden können.

Das Heizelement 42 kann beispielsweise als Widerstandsheizung ausgeführt sein.

In einer weiteren Ausführungsvariante kann auch vorgesehen sein, dass der Schweißkopf 40 zum Ultraschallschweißen bzw. Reibschweißen der einzelnen Faserbänder 2 ausgebildet ist.

Weiters kann eine Niederhalterrolle 43 vorgesehen sein, welche zum Andrücken des Faserbandes 2 an die Ablagefläche 12 dient. Die Niederhalterrolle 43 kann auch zum Verschweißen des Faserbandes 2 entsprechend den Mechanismen, wie sie in der Schweißvorrichtung beschrieben sind, verwendet werden.

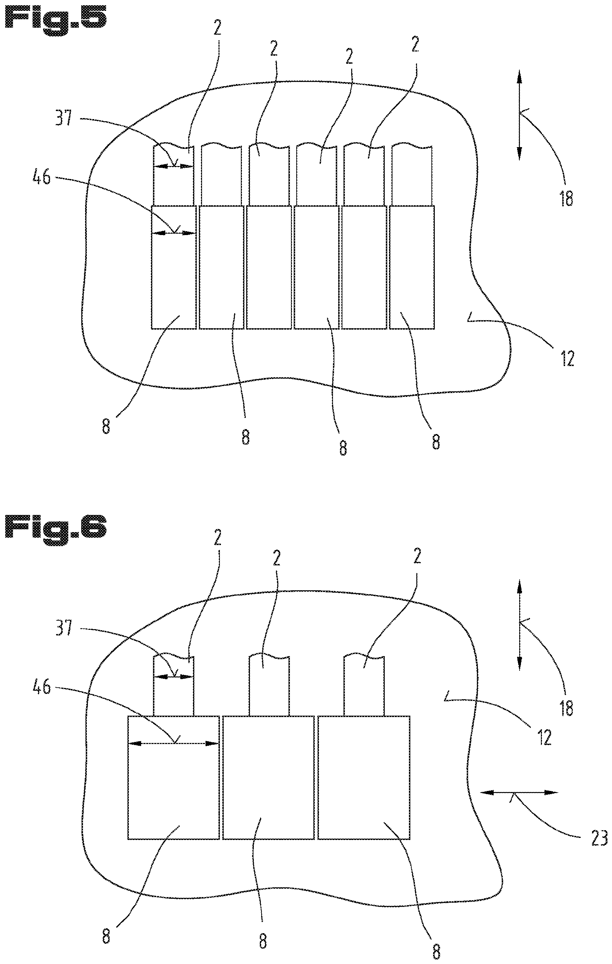

In der Fig. 5 ist eine weitere und gegebenenfalls für sich eigenständige Ausführungsform der Fertigungsanlage 1 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, kann vorgesehen sein, dass die einzelnen Abrollvorrichtungen 8 derart enganliegend aneinander angeordnet sind, dass die einzelnen Faserbänder 2 in einem vorbestimmten Abstand zueinander auf die Ablagefläche 12 abgelegt werden können, welcher dem Endabstand der Faserbänder 2 in einer der jeweiligen Faserbandschicht 3, 4 entspricht. Dadurch kann eine Faserbandschicht 3, 4 jeweils mit nur einem Legevorgang fertig gestellt werden.

In der Fig. 6 ist eine weitere und gegebenenfalls für sich eigenständige Ausführungsform der Fertigungsanlage 1 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Wie aus Fig. 6 ersichtlich, kann vorgesehen sein, dass die einzelnen Abrollvorrichtungen 8 eine derart große Breite 46 aufweisen bzw. derart zueinander angeordnet sind, dass beim ersten Legeschritt eine Lücke zwischen den einzelnen, abgelegten Faserbändern 2 ausgebildet ist. Diese Lücke zwischen den einzelnen Faserbändern 2 kann entweder der einfachen oder der mehrfachen Bandbreite 37 der Faserbänder 2 entsprechen. Natürlich kann hierbei auch ein Abstand zwischen den einzelnen Faserbändern 2 vorgesehen sein. Nach dem ersten Legeschritt kann die Ablagefläche 12 in Querrichtung 23 verschoben werden, sodass in einem zweiten Verfahrensschritt Faserbänder 2 in die Lücken gelegt werden können. Wenn die Lücken einem Vielfachen der Faserbandbreite 46 plus Spalt zwischen den einzelnen Faserbändern entsprechen, dann muss die Verschiebung der Ablagefläche 12 in Querrichtung 23 auch entsprechend oft wiederholt werden.

Anhand einer Zusammenschau der Fig. 1 bis 6 wird ein möglicher Verfahrensablauf zum Legen von Faserbändern 2 erläutert.

Als Startbedingung kann vorgesehen sein, dass alle Abrollvorrichtungen 8 im Bereich des ersten Linearführungsendes 20 der Linearführungen 17 angeordnet sind und dass die Ablagefläche 12 der Ablagevorrichtung 7 leer ist. Die Faserbänder 2 können hierbei derart in der Abrollvorrichtung 8 aufgenommen sein, dass ein Bandansatz 34 zumindest unter der Niederhalterrolle 43 angeordnet ist.

In einem ersten Verfahrensschritt können die einzelnen Abrollvorrichtungen 8 unabhängig voneinander in Legerichtung 18 zum zweiten Linearführungsende 21 hinbewegt werden. Wenn die jeweiligen Abrollvorrichtungen 8 ihre für die jeweilige zu erstellende Kontur vorgegebene Anfangsposition erreichen, können diese angehalten bzw. in deren Verfahrgeschwindigkeit verlangsamt werden.

Um den Bandansatz 34 nun an der Ablagefläche 12 lösbar befestigen zu können, kann die Niederhalterrolle 43 an das Faserband 2 angedrückt werden. Zusätzlich oder alternativ dazu kann an der Ablagefläche 12 ein Vakuum aufgebracht werden. Dieser Befestigungsvorgang kann an allen Abrollvorrichtungen 8 unabhängig voneinander wiederholt werden. Weiters kann auch vorgesehen sein, dass zwischen der Ablagefläche 12 und der ersten Faserbandschicht 3 eine Zwischenschicht, beispielsweise eine Teflonfolie angeordnet wird.

In einem anschließenden Verfahrensschritt können die einzelnen Abrollvorrichtungen 8 wieder unabhängig voneinander in Richtung zum zweiten Linearführungsende 21 bewegt werden. Durch die Relativverschiebung der Abrollvorrichtungen 8 zur Ablagefläche 12 und dadurch, dass der Bandansatz 34 an der Ablagefläche 12 fixiert ist, wird das Faserband 2 aufgrund der Relativbewegung zwischen der Abrollvorrichtung 8 und der Ablagefläche 12 von der Rohmaterialrolle 11 abgezogen.

Wenn die Abrollvorrichtungen 8 ihre jeweilige individuelle Endposition erreichen, können die Abrollvorrichtungen 8 erneut gestoppt werden. Anschließend kann die Klemmeinheit 26 aktiviert werden, sodass das Faserband 2 geklemmt wird. Anschließend kann mittels der Schneideinheit 27 das Faserband 2 abgeschnitten werden. In einem weiteren Verfahrensschritt kann die Ablagefläche 12 in Vertikalrichtung 14 abgesenkt werden. In einem anschließenden Verfahrensvorgang können die einzelnen Abrollvorrichtungen 8 wieder in ihre Ausgangsposition bzw. in die Position ihres nächsten Legestarts bewegt werden.

Gleichzeitig oder zu einem späteren Zeitpunkt kann die Klemmeinheit 26 von ihrer Grundstellung 33 in eine Ausstoßstellung 32 verschoben werden, sodass ein neuer Bandansatz 34 unter die Niederhalterrolle 43 eingeschoben werden kann. Weiters kann eine Fixiereinheit zum Klemmen des Faserbandes im Bereich der Niederhalterrolle 43 vorgesehen sein.

Der weitere Verfahrensschritt ist davon abhängig wie weit die einzelnen Abrollvorrichtungen 8 zueinander beabstandet sind. Wenn die einzelnen Abrollvorrichtungen 8, wie aus Fig. 5 ersichtlich, derart zueinander beabstandet sind, dass bereits alle Faserbänder 2 der ersten Faserbandschicht 3 gelegt werden können, so kann mit dem noch näher beschriebenen Verfahrensschritt zum Legen der zweiten Faserbandschicht 4 fortgesetzt werden.

Wenn die Abrollvorrichtungen 8, wie in Fig. 6 dargestellt, derart zueinander beabstandet sind, dass beispielsweise nur jedes zweite Faserband 2 gelegt werden kann, so muss in einem anschließenden Verfahrensschritt die Ablagefläche 12 in Querrichtung 23 verschoben werden, sodass die noch fehlenden Faserbänder 2 auf der Ablagefläche 12 platziert werden können. Der eigentliche Legevorgang kann, entsprechend der schon beschriebenen Verfahrensschritte ausgeführt werden.

Zum Legen der zweiten Faserbandschicht 4 kann die Ablagefläche 12 um die Rotationsachse 16 gedreht werden, sodass die Faserbänder 2 der zweiten Faserbandschicht 4 winkelig zu den Faserbändern 2 der ersten Faserbandschicht 3 versetzt angeordnet werden können. Zusätzlich kann die Ablagefläche 12 in Vertikalrichtung 14 nach unten verschoben werden, wobei der Betrag der Verschiebung vorzugsweise der Bandstärke 38 entspricht.

Der eigentliche Legevorgang der zweiten Faserbandschicht 4 kann, wie schon beschrieben, ablaufen, wobei zusätzlich zur Niederhalterrolle 43 der Schweißkopf 40 an den Bandansatz 34 angedrückt werden kann, sodass die Faserbänder 2 der zweiten Faserbandschicht 4 mit den Faserbändern 2 der ersten Faserbandschicht 3 verschweißt werden können.

Entsprechend der obig beschriebenen Verfahrensabläufe können beliebig viele Faserbandschichten aufgebaut werden.

Anschließend kann die Ablagevorrichtung 7 in Legerichtung 18 aus dem Bereich der Legevorrichtung 6 herausverschoben werden, sodass mittels der Manipulationsvorrichtung das Gelege 5 aus einzelnen Faserbandschichten 3, 4 von der Ablagefläche 12 abgenommen werden kann. Anschließend kann die Ablagevorrichtung 7 wieder in ihre Ablagestellung bewegt werden.

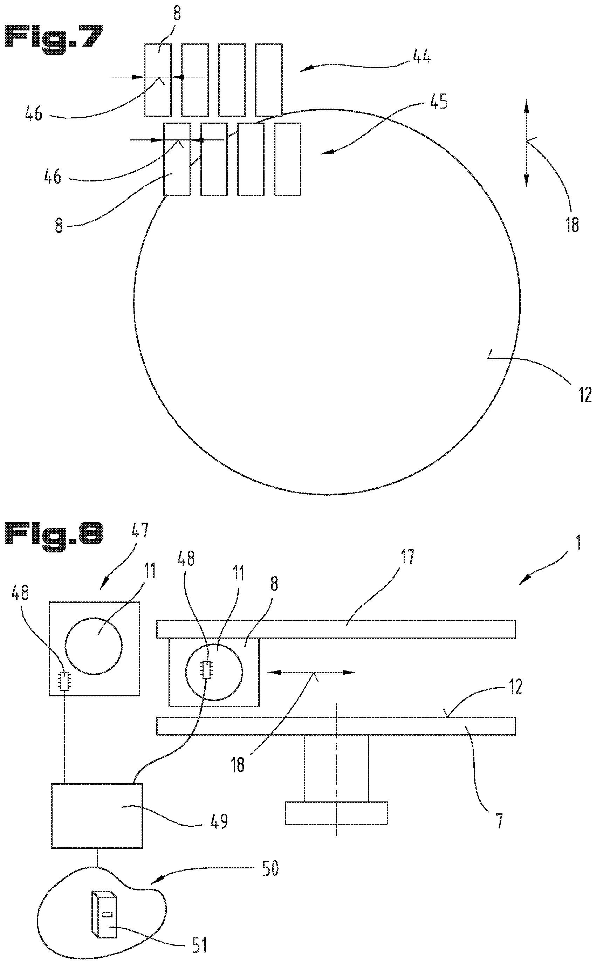

Fig. 7 zeigt ein weiteres Ausführungsbeispiel der Fertigungsanlage 1. Wie aus Fig. 7 ersichtlich, kann vorgesehen sein, dass die einzelnen Abrollvorrichtungen 8 in einer ersten Reihe 44 bzw. in einer zweiten Reihe 45 angeordnet sind, welche in Legerichtung 18 zueinander versetzt sind. Hierbei kann der Abstand von einzelnen zueinander benachbarten Abrollvorrichtungen 8 einer Reihe 44, 45 groß sein, wobei die Lücken durch die Abrollvorrichtungen 8 der weiteren Reihe 44, 45 aufgefüllt werden können. Mit anderen Worten ausgedrückt können sich die Abrollvorrichtungen 8 der ersten Reihe 44 und der zweiten Reihe 45 in Legerichtung 18 gesehen überlappen. Durch eine derartige Ausbildung kann erreicht werden, dass schon in einem ersten Legeschritt jedes der Faserbänder 2 gelegt werden kann, obwohl die Abrollvorrichtungen 8 eine größere Breite 46 als die Breite 47 der Faserbänder 2 aufweisen.

Beim Start des Legevorganges können die Abrollvorrichtungen 8 der ersten Reihe 44 und die Abrollvorrichtungen 8 der zweiten Reihe 45 am selben Linearführungsende 20 oder 21 angeordnet sein und in derselben Legerichtung 18 bewegt werden. Alternativ dazu ist es auch denkbar, dass beim Start des Legevorganges die Abrollvorrichtungen 8 der ersten Reihe 44 und die Abrollvorrichtungen 8 der zweiten Reihe 45 an einem gegenüberliegenden Linearführungsende 20, 21 angeordnet sind und in entgegengesetzter Legerichtung 18 bewegt werden.

Weiters kann vorgesehen sein, dass zwei zueinander benachbarte Abrollvorrichtungen 8 aus unterschiedlichen Reihen 44, 45 an derselben Linearführung 17 befestigt bzw. geführt sind.

Analog zur Ausführungsvariante in Fig. 7 kann natürlich auch vorgesehen sein, dass die Abrollvorrichtungen 8 in mehrere Reihen aufgeteilt sind.

Fig. 8 zeigt in einer Seitenansicht ein weiteres Ausführungsbeispiel der Fertigungsanlage 1. Wie aus Fig. 8 ersichtlich, kann vorgesehen sein, dass ein Rollenspeicher 47 ausgebildet ist, welcher zum Einwechseln von Rohmaterialrollen 11 ausgebildet ist. Insbesondere können im Rollenspeicher 47 mehrere Rohmaterialrollen 11 gelagert sein und bedarfsweise in die einzelnen Abrollvorrichtungen 8 eingewechselt werden.

Weiters kann vorgesehen sein, dass jede der Abrollvorrichtungen 8 einen integrierten Schaltkreis 48 aufweist, mittels welchem die an der Abrollvorrichtung 8 angeordneten Aktoren angesteuert werden können. Mittels dem integrierten Schaltkreis 48 kann ebenfalls die aktuelle Füllmenge an der Rohmaterialrolle 11 der einzelnen Abrollvorrichtungen 8 überwacht werden.

Weiters kann vorgesehen sein, dass die einzelnen integrierten Schaltkreise 48 der einzelnen Abrollvorrichtungen 8 mit einer Zentralsteuerung 49 gekoppelt sind. Beispielsweise ist es auch denkbar, dass die Steuerbefehle zwischen der Zentralsteuerung 49 und der integrierten Schaltkreise 48 mittels einer drahtlosen Datenübertragung übertragen werden.

Die Zentralsteuerung 49 kann zur übergeordneten Steuerung der Fertigungsanlage 1 dienen. Weiters kann vorgesehen sein, dass der Rollenspeicher 47 ebenfalls einen integrierten Schaltkreis 48 aufweist, welcher mit der Zentralsteuerung 49 gekoppelt ist. Mit dem integrierten Schaltkreis 48 des Rollenspeichers 47 kann der Füllstand an zur Verfügung stehenden Rohmaterialrollen 11 im Rollenspeicher 47 überwacht werden bzw. können die Aktoren im Rollenspeicher 47 angesteuert werden.

Weiters kann vorgesehen sein, dass die Zentralsteuerung 49 mittels einem Netzwerk 50 mit einem Rechner 51 gekoppelt ist. Das Netzwerk 50 kann beispielsweise firmenintern ausgebildet sein oder auch mit dem Internet verbunden sein. Hierbei ist es beispielsweise denkbar, dass von der Fertigungsanlage 1 automatisch Bestellvorgänge für Rohmaterialrollen 11 ausgelöst werden, wenn der Rollenspeicher 47 einen Mindestrollenbestand unterschreitet. Darüber hinaus kann vorgesehen sein, dass mittels dem Netzwerk 50 neue Fertigungsaufträge in die Zentralsteuerung 49 der Fertigungsanlage 1 eingespielt werden können. Außerdem ist es auch denkbar, dass mittels dem Netzwerk 50 die aktuellen Zustände bzw. der aktuelle Fertigungsvorgang an der Fertigungsanlage 1 abgefragt wird. Darüber hinaus kann der Ablauf der Legevorgänge optimiert werden, sodass die Füllmengen der Rohmaterialrollen 11 bestmöglich ausgenutzt werden.

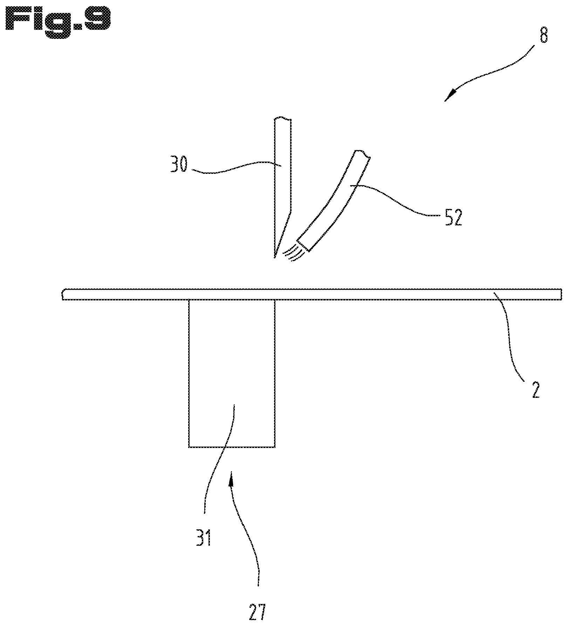

Fig. 9 zeigt ein weiteres Ausführungsbeispiel der Abrollvorrichtung 8, wobei die Schneideinheit 27 in einer schematischen Seitenansicht dargestellt ist. Wie aus Fig. 9 ersichtlich, kann vorgesehen sein, dass eine Kühlvorrichtung 52 ausgebildet ist, welche zur Kühlung des Faserbandes 2 im Bereich der Schneideinheit 27 dient. Durch die Kühlvorrichtung 52 kann die Sprödigkeit des Faserbandes 2 in jenem Bereich in dem es abgeschnitten werden soll, lokal erhöht werden. Dadurch kann das Faserband 2 erleichtert abgeschnitten werden. Die Kühlvorrichtung 52 kann beispielsweise zum Ausgeben eines Kühlmittels, wie etwa flüssigem Stickstoff, ausgebildet sein.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fertigungsanlage | 31 | Gegenhalter |
| 2 | Faserband | 32 | Ausstoßstellung |
| 3 | erste Faserbandschicht | 33 | Grundstellung |
| 4 | zweite Faserbandschicht | 34 | Bandansatz |
| 5 | Gelege | 35 | Umlenkrollenanordnung |
| 6 | Legevorrichtung | 36 | Umlenkrolle |
| 7 | Ablagevorrichtung | 37 | Breite Faserband |
| 8 | Abrollvorrichtung | 38 | Bandstärke |
| 9 | Abrollvorrichtungsaufnahme | 39 | optische Einheit |
| 10 | Aufnahmevorrichtung | 40 | Schweißkopf |
| 11 | Rohmaterialrolle | 41 | Niederdrückkufe |
| 12 | Ablagefläche Ablagevorrichtung | 42 | Heizelement |
| 13 | Durchtrittsöffnung | 43 | Niederhalterrolle |
| 14 | Vertikalrichtung | 44 | erste Reihe |
| 15 | Abstand | 45 | zweite Reihe |
| 16 | Rotationsachse | 46 | Breite Abrollvorrichtung |
| 17 | Linearführung | 47 | Rollenspeicher |
| 18 | Legerichtung | 48 | integrierter Schaltkreis |
| 19 | Portal | 49 | Zentralsteuerung |
| 20 | erstes Linearführungsende | 50 | Netzwerk |
| 21 | zweites Linearführungsende | 51 | Rechner |
| 22 | Antriebseinheit | 52 | Kühlvorrichtung |
| 23 | Querrichtung | | |
| 24 | Querrichtungsführung | | |
| 25 | Längsrichtungsführung | | |
| 26 | Klemmeinheit | | |
| 27 | Schneideinheit | | |
| 28 | Klemmbacken | | |
| 29 | Gegenhalter | | |
| 30 | Schneidmesser | | |

## Patentansprüche

1. Fertigungsanlage (1) zum Legen von Faserbändern (2), die Fertigungsanlage (1) umfassend:
- eine Legevorrichtung (6) mit einer Abrollvorrichtungsaufnahme (9) und zumindest zwei nebeneinander an der Abrollvorrichtungsaufnahme (9) angeordneten Abrollvorrichtungen (8), welche Abrollvorrichtungen (8) jeweils eine Aufnahmevorrichtung (10) zur Aufnahme einer Rohmaterialrolle (11) und eine Schneideinheit (27) zum Schneiden des Faserbandes (2) umfassen;
- eine Ablagevorrichtung (7) mit einer Ablagefläche (12) zur Aufnahme des von der Rohmaterialrolle (11) abgerollten Faserbandes (2), wobei die Ablagefläche (12) der Ablagevorrichtung (7) und die Abrollvorrichtung (8) der Legevorrichtung (6) zueinander in Legerichtung (18) relativverschiebbar sind, wodurch das Faserband (2) streifenweise auf die Ablagefläche (12) abrollbar ist,
**dadurch gekennzeichnet, dass**
die zumindest zwei Abrollvorrichtungen (8) mittels einer Linearführung (17) mit einer Abrollvorrichtungsaufnahme (9) der Legevorrichtung (6) gekoppelt sind und unabhängig voneinander in Legerichtung (18) relativ zur Abrollvorrichtungsaufnahme (9) verschiebbar sind.

2. Fertigungsanlage nach Anspruch 1, **dadurch gekennzeichnet, dass** die Abrollvorrichtungen (8) jeweils einen Schweißkopf (40) aufweisen, welcher zum Verschweißen von zwei übereinander abgelegten Faserbändern (2) ausgebildet ist.

3. Fertigungsanlage nach Anspruch 2, **dadurch gekennzeichnet, dass** der Schweißkopf (40) zumindest eine Niederdrückkufe (41) und insbesondere ein Heizelement (42) zur Erhitzung der Niederdrückkufe (41) aufweist.

4. Fertigungsanlage nach einem der vorhergehenden Ansprüche, **dadurch gekennzeichnet, dass** die Ablagefläche (12) der Ablagevorrichtung (7) in einer Vertikalrichtung (14) höhenverstellbar ist, sodass der Abstand (15) der Ablagefläche (12) zu den Abrollvorrichtungen (8) anpassbar ist.

5. Fertigungsanlage nach einem der vorhergehenden Ansprüche, **dadurch gekennzeichnet, dass** die Ablagefläche (12) der Ablagevorrichtung (7) in Querrichtung (23) zur Legerichtung (18) verschiebbar ist.

6. Fertigungsanlage nach einem der vorhergehenden Ansprüche, **dadurch gekennzeichnet, dass** die Ablagefläche (12) der Ablagevorrichtung (7) um eine Normal zur Ablagefläche (12) stehende Rotationsachse (16) drehbar ist.

7. Fertigungsanlage nach einem der vorhergehenden Ansprüche, **dadurch gekennzeichnet, dass** jede der einzelnen Abrollvorrichtungen (8) jeweils mit einer Antriebseinheit (22), insbesondere einem Linearmotor, gekoppelt sind, mittels welcher die Abrollvorrichtungen (8) unabhängig voneinander in Legerichtung (18) verschiebbar sind.

8. Fertigungsanlage nach Anspruch 7, **dadurch gekennzeichnet, dass** jeder der Abrollvorrichtungen (8) ein eigener integrierter Schaltkreis (48) zugeordnet ist, wobei die einzelnen integrierten Schaltkreise (48) mit einer übergeordneten Zentralsteuerung (49) gekoppelt sind.

9. Fertigungsanlage nach einem der vorhergehenden Ansprüche, **dadurch gekennzeichnet, dass** im Bereich der Schneideinheit (27) eine Kühlvorrichtung (52) angeordnet ist, mittels welcher das Faserband (2) kühlbar ist.

10. Verfahren zum Legen von Faserbändern (2), insbesondere unter Verwendung einer Fertigungsanlage (1) nach einem der vorhergehenden Ansprüche, **dadurch gekennzeichnet, dass** das Verfahren die folgenden Verfahrensschritte umfasst:
- Bereitstellen einer Legevorrichtung (6) mit zumindest zwei nebeneinander angeordneten Abrollvorrichtungen (8), welche Abrollvorrichtungen (8) jeweils eine Aufnahmevorrichtung (10) zur Aufnahme einer Rohmaterialrolle (11) eines Faserbandes (2) und eine Schneideinheit (27) zum Schneiden des Faserbandes (2) umfassen, wobei die zumindest zwei Abrollvorrichtungen (8) jeweils mittels einer Linearführung (17) mit einer Abrollvorrichtungsaufnahme (9) der Legevorrichtung (6) gekoppelt sind und unabhängig voneinander in Legerichtung (18) relativ zur Abrollvorrichtungsaufnahme (9) verschiebbar sind;
- Bereitstellen einer Ablagevorrichtung (7) mit einer Ablagefläche (12);
- Aufbringen des Faserbandes (2) einer ersten der Abrollvorrichtungen (8) auf die Ablagefläche (12) der Ablagevorrichtung (7);
- Fixieren des Faserbandes (2) der ersten Abrollvorrichtung (8) auf der Ablagefläche (12) der Ablagevorrichtung (7);
- Abrollen des Faserbandes (2) der ersten Abrollvorrichtung (8) durch verschieben der ersten Abrollvorrichtung (8) in Legerichtung (18), wobei das Faserband (2) dadurch auf die Ablagefläche (12) abgerollt wird, dass es auf der Ablagefläche (12) fixiert ist und durch das Verschieben der ersten Abrollvorrichtung (8) von dieser abgezogen wird;
- Ablängen des Faserbandes (2) mittels der Schneideinheit (27) der ersten Abrollvorrichtung (8);
- Aufbringen des Faserbandes (2) einer zweiten der Abrollvorrichtungen (8) auf die Ablagefläche (12) der Ablagevorrichtung (7);
- Fixieren des Faserbandes (2) der zweiten Abrollvorrichtung (8) auf der Ablagefläche (12) der Ablagevorrichtung (7);
- Abrollen des Faserbandes (2) der zweiten Abrollvorrichtung (8) durch verschieben der zweiten Abrollvorrichtung (8) in Legerichtung (18), wobei das Faserband (2) dadurch auf die Ablagefläche (12) abgerollt wird, dass es auf der Ablagefläche (12) fixiert ist und durch das Verschieben der zweiten Abrollvorrichtung (8) von dieser abgezogen wird;
- Ablängen des Faserbandes (2) mittels der Schneideinheit (27) der zweiten Abrollvorrichtung (8),
wobei die Einzelschritte der ersten Abrollvorrichtung (8) und der zweiten Abrollvorrichtung (8) zu unterschiedlichen Zeitpunkten oder zum gleichen Zeitpunkt gestartet werden können.

11. Verfahren nach Anspruch 10, **dadurch gekennzeichnet, dass** die Faserbänder (2) einer ersten Faserbandschicht (3) direkt an der Ablagefläche (12) der Ablagevorrichtung (7) oder an einer Zwischenschicht fixiert werden und anschließend die Faserbänder (2) einer zweiten Faserbandschicht (4) auf die Faserbänder (2) der ersten Faserbandschicht (3) aufgebracht wird, wobei jedes der Faserbänder (2) der zweiten Faserbandschicht (4) mittels einem an der Abrollvorrichtung (8) angeordneten Schweißkopf (40) mit Faserbändern (2) der ersten Faserbandschicht (3) zumindest teilweise stoffschlüssig verbunden wird.

12. Verfahren nach Anspruch 10 oder 11, **dadurch gekennzeichnet, dass** die Anzahl der Abrollvorrichtungen (8) geringer ist, als die Anzahl der pro Faserbandschicht (3, 4) vorgesehenen Faserbänder (2) und dass in einem ersten Verfahrensschritt nur jedes zweite Faserband (2) einer Faserbandschicht (3, 4) gelegt wird, anschließend die Ablagefläche (12) der Ablagevorrichtung (7) in Querrichtung (23) zur Legerichtung (18) verschoben wird und anschließend in einem weiteren Verfahrensschritt die zwischenliegenden, fehlenden Faserbänder (2) einer Faserbandschicht (3, 4) gelegt werden.

13. Verfahren nach einem der Ansprüche 10 bis 12, **dadurch gekennzeichnet, dass** die Restlänge des auf der Rohmaterialrolle (11) befindlichen Faserbandes (2) ständig überwacht wird und dass vor dem Start des Legens der Faserbänder (2) berechnet wird, ob die Restlänge des auf der Rohmaterialrolle (11) befindlichen Faserbandes (2) ausreichend für den anstehenden Legevorgang ist, wobei bedarfsweise eine in einem Rollenspeicher (47) befindliche Rohmaterialrolle (11) eingetauscht wird.

14. Verfahren nach einem der Ansprüche 10 bis 13, **dadurch gekennzeichnet, dass** der Bestand an in einem Rollenspeicher (47) befindlichen Rohmaterialrollen (11) und/oder die auf den Rohmaterialrollen (11) befindlichen Bandlängen überwacht wird, wobei bei Erreichen eines vordefinierten Minimums an Rohmaterialrollen (11) oder Bandlängen ein Bestellvorgang ausgelöst wird, bei welchem ein Befehl von der Zentralsteuerung (49) an einen in einem Netzwerk (50) befindlichen Rechner (51) gesandt wird.

15. Verfahren nach einem der Ansprüche 10 bis 14, **dadurch gekennzeichnet, dass** die Abrollvorrichtungen (8) beim Fixieren des Faserbandes (2) auf der Ablagefläche (12) der Ablagevorrichtung (7) in deren Verfahrbewegung gestoppt oder zumindest stark abgebremst werden.

## Claims

1. A production plant (1) for laying fiber tapes (2), the production plant (1) comprising:
- a laying device (6) having an unwinder receptacle (9) and at least two unwinders (8) arranged next to one another on the unwinder receptacle (9), which unwinders (8) each comprise a receiving device (10) for receiving a raw material reel (11) and a cutting unit (27) for cutting the fiber tape (2);
- a depositing device (7) having a depositing surface (12) for receiving the fiber tape (2) unwound from the raw material reel (11), the depositing surface (12) of the depositing device (7) and the unwinder (8) of the laying device (6) being displaceable relative to one another in the laying direction (18), whereby the fiber tape (2) can be unwound in stripes onto the depositing surface (12),
**characterized in that**
the at least two unwinders (8) are coupled to an unwinder receptacle (9) of the laying device (6) by means of a linear guide (17) and are movable independently of each other in the laying direction (18) relative to the unwinder receptacle (9).

2. The production system according to claim 1, **characterized in that** the unwinders (8) each have a welding head (40) which is formed for welding two fiber tapes (2) laid one on top of the other.

3. The production system according to claim 2, **characterized in that** the welding head (40) comprises at least one pressing-down skid (41) and in particular a heating element (42) for heating the pressing-down skid (41).

4. The production system according to one of the preceding claims, **characterized in that** the depositing surface (12) of the depositing device (7) is height-adjustable in a vertical direction (14) so that the distance (15) of the depositing surface (12) from the unwinders (8) can be adapted.

5. The production system according to one of the preceding claims, **characterized in that** the depositing surface (12) of the depositing device (7) is displaceable in a transverse direction (23) to the laying direction (18).

6. The production system according to one of the preceding claims, **characterized in that** the depositing surface (12) of the depositing device (7) is rotatable about an axis of rotation (16) perpendicular to the depositing surface (12).

7. The production system according to one of the preceding claims, **characterized in that** each of the individual unwinders (8) is coupled to a drive unit (22), in particular to a linear motor, by means of which the unwinders (8) can be displaced independently of one another in the laying direction (18).

8. The production system according to claim 7, **characterized in that** each of the unwinders (8) is assigned its own integrated circuit (48), the individual integrated circuits (48) being coupled to a superordinate central control (49).

9. The production system according to one of the preceding claims, **characterized in that** a cooling device (52) is arranged in the area of the cutting unit (27), by means of which the fiber tape (2) can be cooled.

10. A method for laying fiber tapes (2), in particular using a production system (1) according to one of the preceding claims, **characterized in that** the method comprises the following method steps:
- providing a laying device (6) having at least two unwinders (8) arranged next to one another, which unwinders (8) each comprise a receiving device (10) for receiving a raw material reel (11) of a fiber tape (2) and a cutting unit (27) for cutting the fiber tape (2), wherein the at least two unwinders (8) are each coupled by means of a linear guide (17) to an unwinder receptacle (9) of the laying device (6) and are movable independently of one another in the laying direction (18) relative to the unwinder receptacle (9);
- providing a depositing device (7) with a depositing surface (12);
- applying the fiber tape (2) of a first of the unwinders (8) to the depositing surface (12) of the depositing device (7);
- fixing the fiber tape (2) of the first unwinder (8) on the depositing surface (12) of the depositing device (7);
- unwinding the fiber tape (2) of the first unwinder (8) by displacing the first unwinder (8) in the laying direction (18), wherein the fiber tape (2) is thereby unwound onto the depositing surface (12) in such a way that it is fixed on the depositing surface (12) and is drawn off from the latter by the displacement of the first unwinder (8);
- cutting the fiber tape (2) to length by means of the cutting unit (27) of the first unwinder (8);
- applying the fiber tape (2) of a second of the unwinders (8) to the depositing surface (12) of the depositing device (7);
- fixing the fiber tape (2) of the second unwinder (8) on the depositing surface (12) of the depositing device (7);
- unwinding the fiber tape (2) of the second unwinder (8) by displacing the second unwinder (8) in the laying direction (18), wherein the fiber tape (2) is thereby unwound onto the depositing surface (12) in such a way that it is fixed on the depositing surface (12) and is drawn off from the latter by the displacement of the second unwinder (8);
- cutting the fiber tape (2) to length by means of the cutting unit (27) of the second unwinder (8),
wherein the individual steps of the first unwinder (8) and the second unwinder (8) can be started at different times or at the same time.

11. The method according to claim 10, **characterized in that** the fiber tapes (2) of a first fiber tape layer (3) are fixed directly on the depositing surface (12) of the depositing device (7) on an intermediate layer, and then the fiber tapes (2) of a second fiber tape layer (4) are applied to the fiber tapes (2) of the first fiber tape layer (3), wherein each of the fiber tapes (2) of the second fiber tape layer (4) is at least partially integrally bonded to the fiber tapes (2) of the first fiber tape layer (3) by means of a welding head (40) arranged on the unwinder (8).

12. The method according to claim 10 or 11, **characterized in that** the number of unwinders (8) is less than the number of fiber tapes (2) provided per fiber tape layer (3, 4) and that in a first method step only every second fiber tape (2) of a fiber tape layer (3, 4) is laid, then the depositing surface (12) of the depositing device (7) is displaced in transverse direction (23) to the laying direction (18), and subsequently, in a further method step, the intermediate, missing fiber tapes (2) of a fiber tape layer (3, 4) are laid.

13. The method according to one of claims 10 to 12, **characterized in that** the residual length of the fiber tape (2) on the raw material reel (11) is constantly monitored and that before the start of laying the fiber tapes (2), it is calculated whether the residual length of the fiber tape (2) on the raw material reel (11) is sufficient for the upcoming laying operation, wherein a raw material reel (11) located in a reel store (47) is exchanged as required.

14. The method according to any one of claims 10 to 13, **characterized in that** the stock of raw material reels (11) located in a reel store (47) and/or the tape lengths located on the raw material reels (11) is monitored, wherein, when a predefined minimum of raw material reels (11) or tape lengths is reached, an order process is triggered, in which a command is sent from the central control (49) to a computer (51) located in a network (50).

15. The method according to one of claims 10 to 14, **characterized in that** the unwinders (8) are stopped or at least greatly decelerated in their traversing movement when the fiber tape (2) is fixed on the depositing surface (12) of the depositing device (7).

## Revendications

1. Installation de fabrication (1) pour la pose de bandes de fibres (2), cette installation de fabrication (1) comprenant :
- un dispositif de pose (6) avec un logement de dispositif de déroulement (9) et au moins deux dispositifs de déroulement (8) disposés l'un à côté de l'autre sur le logement de dispositif de déroulement (9), ces dispositifs de déroulement (8) comprenant chacun un dispositif de logement (10) pour le logement d'un rouleau de matériau brut (11) et une unité de coupe (27) pour la coupe de la bande de fibres (2) ;
- un dispositif de dépôt (7) avec une surface de dépôt (12) pour le logement de la bande de fibres (2) déroulée du rouleau de matériau brut (11), dans lequel la surface de dépôt (12) du dispositif de dépôt (7) et le dispositif de déroulement (8) du dispositif de pose (6) peuvent être déplacés de manière relative entre eux dans la direction de pose (18), ce qui permet de dérouler la bande de fibres (2) par bandes sur la surface de dépôt (12),
**caractérisée en ce que**
les au moins deux dispositifs de déroulement (8) sont couplés au moyen d'un guidage linéaire (17) avec un logement de dispositif de déroulement (9) du dispositif de pose (6) et peuvent être déplacés indépendamment l'un de l'autre dans la direction de pose (18) par rapport au logement de dispositif de déroulement (9).

2. Installation de fabrication selon la revendication 1, **caractérisée en ce que** les dispositifs de déroulement (8) comprennent chacun une tête de soudure (40) qui est conçue pour la soudure des deux bandes de fibres (2) déposées l'une sur l'autre.

3. Installation de fabrication selon la revendication 2, **caractérisée en ce que** la tête de soudure (40) comprend au moins un patin de compression (41) et plus particulièrement un élément chauffant (42) pour le chauffage du patin de compression (41).

4. Installation de fabrication selon l'une des revendications précédentes, **caractérisée en ce que** la surface de dépôt (12) du dispositif de dépôt (7) peut être réglée en hauteur dans une direction verticale (14), de façon à ce que la distance (15) entre la surface de dépôt (12) et les dispositifs de déroulement (8) puisse être adaptée.

5. Installation de fabrication selon l'une des revendications précédentes, **caractérisée en ce que** la surface de dépôt (12) du dispositif de dépôt (7) peut être déplacée dans la direction transversale (23) à la direction de pose (18).

6. Installation de fabrication selon l'une des revendications précédentes, **caractérisée en ce que** la surface de dépôt (12) du dispositif de dépôt (7) peut être mise en rotation autour d'un axe de rotation (16) perpendiculaire à la surface de dépôt (12).

7. Installation de fabrication selon l'une des revendications précédentes, **caractérisée en ce que** chacun des dispositifs de déroulement (8) est couplé respectivement avec une unité d'entraînement (22), plus particulièrement un moteur linéaire, au moyen duquel les dispositifs de déroulement (8) peuvent être déplacés indépendamment l'un de l'autre dans la direction de pose (18).

8. Installation de fabrication selon la revendication 7, **caractérisée en ce qu'**à chacun des dispositifs de déroulement (8) correspond un circuit intégré (48), dans lequel les différents circuits intégrés (48) sont couplés avec une commande centrale principale (49).

9. Installation de fabrication selon l'une des revendications précédentes, **caractérisée en ce que**, au niveau de l'unité de coupe (27), est disposée un dispositif de refroidissement (52) au moyen duquel la bande de fibres (2) peut être refroidie.

10. Procédé de pose de bandes de fibres (2), plus particulièrement à l'aide d'une installation de fabrication (1) selon l'une des revendications précédentes, **caractérisé en ce que** le procédé comprend les étapes suivantes :
- mise à disposition d'un dispositif de pose (6) avec au moins deux dispositifs de déroulement (8) juxtaposés, ces dispositifs de déroulement (8) comprenant chacun un dispositif de logement (10) pour le logement d'un rouleau de matériau brut (11) d'une bande de fibres (2) et une unité de coupe (27) pour la coupe de la bande de fibres (2), dans lequel les au moins deux dispositifs de déroulement (8) sont couplés au moyen d'un guidage linéaire (17) avec un logement de dispositif de déroulement (9) du dispositif de pose (6) et peuvent être déplacés indépendamment l'un de l'autre dans la direction de pose (18) par rapport au logement de dispositif de déroulement (9) ;
- mise à disposition d'un dispositif de dépôt (7) avec une surface de dépôt (12) ;
- application de la bande de fibres (2) d'un premier des dispositifs de déroulement (8) sur la surface de dépôt (12) du dispositif de dépôt (7) ;
- fixation de la bande de fibres (2) du premier dispositif de déroulement (8) sur la surface de dépôt (12) du dispositif de dépôt (7) ;
- déroulement de la bande de fibres (2) du premier dispositif de déroulement (8) par le déplacement du premier dispositif de déroulement (8) dans la direction de pose (18), dans lequel la bande de fibres (2) est déroulée sur la surface de dépôt (12) grâce au fait qu'elle est fixée sur la surface de dépôt (12) et est tirée par le premier dispositif de déroulement (8) grâce au déplacement de celui-ci ;
- découpe à la longueur de la bande de fibres (2) au moyen de l'unité de coupe (27) du premier dispositif de déroulement (8) ;
- application de la bande de fibres (2) d'un deuxième des dispositifs de déroulement (8) sur la surface de dépôt (12) du dispositif de dépôt (7) ;
- fixation de la bande de fibres (2) du deuxième dispositif de déroulement (8) sur la surface de dépôt (12) du dispositif de dépôt (7) ;
- déroulement de la bande de fibres (2) du deuxième dispositif de déroulement (8) par le déplacement du deuxième dispositif de déroulement (8) dans la direction de pose (18), dans lequel la bande de fibres (2) est déroulée sur la surface de dépôt (12) grâce au fait qu'elle est fixée sur la surface de dépôt (12) et est tirée par le deuxième dispositif de déroulement (8) grâce au déplacement de celui-ci ;
- découpe à la longueur de la bande de fibres (2) au moyen de l'unité de coupe (27) du deuxième dispositif de déroulement (8),
dans lequel les étapes individuelles du premier dispositif de déroulement (8) et du deuxième dispositif de déroulement (8) peuvent être démarrées à des moments différents ou au même moment.

11. Procédé selon la revendication 10, **caractérisé en ce que** les bandes de fibres (2) d'une première couche de bandes de fibres (3) sont fixées directement à la surface de dépôt (12) du dispositif de dépôt (7) ou à une couche intermédiaire puis les bandes de fibres (2) d'une deuxième couche de bandes de fibres (4) sont appliquées sur les bandes de fibres (2) de la première couche de bandes de fibres (3), dans lequel chacune des bandes de fibres (2) de la deuxième couche de bandes de fibres (4) est reliée au moyen d'une tête de soudure (40) disposée sur le dispositif de déroulement (8) avec les bandes de fibres (2) de la première couche de bandes de fibres (3) au moins partiellement par liaison de matière.

12. Procédé selon la revendication 10 ou 11, **caractérisé en ce que** le nombre de dispositifs de déroulement (8) est inférieur au nombre de bandes de fibres (2) prévues par couche de bandes de fibres (3, 4) et **en ce que**, dans une première étape, seulement une bande de fibres (2) sur deux d'une couche de bandes de fibres (3, 4) est posée puis la surface de dépôt (12) du dispositif de dépôt (7) est déplacée dans la direction transversale (23) à la direction de pose (18) puis, dans une autre étape, les bandes de fibres (2) intermédiaires manquante d'une couche de bandes de fibres (3, 4) sont posées.

13. Procédé selon l'une des revendications 10 à 12, **caractérisé en ce que** la longueur restante de la bande de fibres (2) se trouvant sur le rouleau de matériau brut (11) est constamment surveillée et **en ce que**, avant le démarrage de la pose des bandes de fibres (2), il est calculé si la longueur restante de la bande de fibres (2) se trouvant sur le rouleau de matériau brut (11) est suffisante pour le processus de pose à venir, dans lequel, si nécessaire, un rouleau de matériau brut (11) se trouvant dans une réserve de rouleaux (47) est inséré.

14. Procédé selon l'une des revendications 10 à 13, **caractérisé en ce que** le stock de rouleaux de matériau brut (11) se trouvant dans la réserve de rouleaux (47) et/ou les longueurs de bandes se trouvant sur les rouleaux de matériau brut (11) sont surveillés, dans lequel, lorsqu'un minimum prédéfini de rouleaux de matériau brut (11) ou de longueurs de bandes est atteint, un processus de commande est déclenché, lors duquel une instruction est envoyée par la commande centrale (49) à un ordinateur (51) se trouvant dans un réseau (50).

15. Procédé selon l'une des revendications 10 à 14, **caractérisé en ce que** les dispositifs de déroulement (8) sont arrêtés ou au moins fortement freinés dans leur déplacement lors de la fixation de la bande de fibres (2) sur la surface de dépôt (12) dispositif de dépôt (7).
